(19) Europäisches Patentamt
European Patent Office
Office européen des brevets

(11) Veröffentlichungsnummer: **0 073 446**
**B1**

(12) # EUROPÄISCHE PATENTSCHRIFT

(45) Veröffentlichungstag der Patentschrift: **17.04.85**

(51) Int. Cl.⁴: **C 08 L 83/04**

(21) Anmeldenummer: **82107712.0**

(22) Anmeldetag: **23.08.82**

(54) **Silikonkautschuk mit verzögerter Hautbildung.**

(30) Priorität: **25.08.81 DE 3133564**

(43) Veröffentlichungstag der Anmeldung: **09.03.83 Patentblatt 83/10**

(45) Bekanntmachung des Hinweises auf die Patenterteilung: **17.04.85 Patentblatt 85/16**

(84) Benannte Vertragsstaaten: **AT BE DE FR GB IT**

(56) Entgegenhaltungen:
**DE - A - 1 544 810**
**DE - A - 2 638 452**
**GB - A - 1 156 668**

**CHEMICAL ABSTRACTS, Band 87, Nr. 4, 25. Juli 1977, Seite 91, Nr. 24959s, Columbus, Ohio, USA**

(73) Patentinhaber: **WACKER-CHEMIE GMBH, Prinzregentenstrasse 22, D-8000 München 22 (DE)**

(72) Erfinder: **Bosch, Erhard, Dr. Dipl.-Chem., Brucknerstrasse 43, D-8263 Burghausen (DE)**
Erfinder: **Craubner, Ingo, Dr. Dipl.-Chem., Nederlinger Strasse 32 a, D-8000 München 19 (DE)**
Erfinder: **Dorsch, Norman, Fuchshausen 148 1/3, D-8263 Burghausen (DE)**
Erfinder: **Schiller, August, Dr. Dipl.-Chem., Göllstrasse 22, D-8262 Neuötting (DE)**
Erfinder: **Sommer, Oswin, Dr. Dipl.-Ing., Haydnstrasse 12, D-8263 Burghausen (DE)**

**EP 0 073 446 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Massen auf Basis von Organopolysiloxan, die unter Ausschluß von Wasser lagerfähig sind und bei Zutritt von Wasser bei Raumtemperatur zu Elastomeren vernetzen.

Organopolysiloxanmassen mit derartigen Eigenschaften sind beispielsweise aus DE-OS 2 737 303 bekannt. Sie werden für Beschichtungen, als Fugen- oder Verkittungsmassen und dergleichen verwendet. Die Vernetzung dieser Massen erfolgt in der Regel bereits unter dem Einfluß von Luftfeuchtigkeit. Dieser Vernetzungsprozeß beginnt gewöhnlich an der Massenoberfläche unter Ausbildung einer Haut und setzt sich ins Innere der Masse bis zur vollständigen Durchvulkanisation der Masse fort.

Aufgabe der Erfindung war es, unter Zutritt von Wasser zu Elastomeren vernetzende Massen auf Basis von Organopolysiloxan aufzufinden, die einerseits verzögerte Hautbildung zeigen, andererseits jedoch mit gegenüber konventionellen Massen vergleichbarer Geschwindigkeit durchvulkanisieren.

Es wurde nun gefunden, daß diese Aufgabe durch Zusatz mercaptofunktioneller Silane bzw. Siloxane zu den genannten Massen gelöst wird.

Gegenstand der Erfindung sind unter Ausschluß von Wasser lagerfähige, bei Zutritt von Wasser bei Raumtemperatur zu Elastomeren vernetzende Massen auf Basis von Organopolysiloxan, die

a) kondensationsfähige Endgruppen aufweisendes Diorganopolysiloxan,
b) Siliciumverbindungen, die je Molekül mindestens 3 über Stickstoff an Silicium gebundene Aminogruppen und/oder über Sauerstoff an Silicium gebundene Oximgruppen aufweisen, und ggf.
d) übliche Zusätze

enthalten und die dadurch gekennzeichnet sind, daß sie als weitere Komponente

c) Siliciumverbindungen enthalten, die je Molekül mindestens eine über Kohlenstoff gebundene Thiolgruppe aufweisen.

Die Komponente c) gemäß Anspruch wird vorzugsweise in Mengen von 0,1 Gew.-% bis 5 Gew.-%, bezogen auf das Gesamtgewicht der Masse, eingesetzt.

Die im Rahmen der Erfindung einzusetzenden kondensationsfähige Endgruppe aufweisenden Diorganopolysiloxane können durch die allgemeine Formel

$$A-(SiR^1_2O)_x-SiR^1_2A$$

wiedergegeben werden, wobei

$R^1$ für gleiche oder verschiedene, einwertige, ggf. substituierte und/oder polymere Kohlenwasserstoffreste steht
x eine ganze Zahl im Wert von mindestens 10 ist und
A eine kondensationsfähige Gruppe bedeutet.

Beispiele für $R^1$ sind Alkylreste, wie der Methyl-, Ethyl-, n-Propyl- oder der iso-Propylrest sowie Octadecylreste, Alkenylreste, wie der Vinyl- oder Allylrest, cycloaliphatische Reste, wie der Cyclopentyl- oder Cyclohexylrest, sowie Methylcyclohexyl- oder Cyclohexenylreste, Arylreste, wie der Phenylrest oder Xenylreste, Aralkylreste, wie der Benzyl-, der β-Phenylethyl- oder der β-Phenylpropylrest, sowie Alkarylreste, wie Toluylreste. Unter den substituierten Kohlenwasserstoffresten sind Halogenarylreste, wie Chlorphenyl- oder Bromphenylreste oder Cyanalkylreste, wie der β-Cyanethylrest, bevorzugt.

Beispiele für substituierte polymere oder unsubstituierte polymere Reste $R^1$ sind solche, die sich durch Copolymerisation von beispielsweise Vinylacetat, Ethylen, Styrol, Acrylsäure, Methacrylsäure, Acrylsäureester, wie n-Propylacrylat, Methacrylsäureester, wie n-Butylmethacrylat, Acrylnitril oder Methacrylnitril oder Gemischen der genannten Monomeren mit Diorganopolysiloxan in Gegenwart von Radikalbildnern herleiten lassen.

Beispiele für kondensationsfähige Endgruppen A sind Hydroxyl-, über Stickstoff gebundene Amino-, über Sauerstoff gebundene Oximgruppen, Alkoxygruppen mit 1 bis 5 Kohlenstoffatomen oder Alkoxyalkylenoxygruppen mit 1 bis 5 Kohlenstoffatomen, insbesondere Hydroxylgruppen.

Bei den genannten Diorganopolysiloxanen gemäß a) des Anspruchs kann es sich um Homo- oder Mischpolymerisate handeln. Es können Gemische aus verschiedenen, kondensationsfähige Endgruppen aufweisenden Diorganopolysiloxanen verwendet werden.

Vorzugsweise sind mindestens 50% der Anzahl der SiC-gebundenen Reste am Diorganopolysiloxan Methylreste.

Zweckmäßigerweise beträgt die Viskosität der Diorganopolysiloxane 100 bis 500 000 mPa · s bei 25°C.

Als mindestens 3 über Stickstoff gebundene Aminogruppen und/oder mindestens 3 über Sauerstoff gebundene Oximgruppen aufweisenden Siliciumverbindungen kommen Aminosilane der allgemeinen Formel

$$R^2_aSi(NR^3_2)_{4-a}$$

Oximsilane der allgemeinen Formel

$$R^2_aSi(O-N=Y)_{4-a}$$

Amin-Oxim-Silane der allgemeinen Formel

$$R^2_aSi(ON=Y)_b(N-R^3_2)_{4-a-b}$$

sowie deren Teilhydrolysate mit höchstens 10 Siliciumatomen in Betracht.

a bedeutet in diesen allgemeinen Formeln 0 oder 1, die Summe aus a und b ist höchstens 3. Für $R^2$ und $R^3$ gilt die selbe Definition, wie für $R^1$. Spezielle Beispiele für $R^2$ sind der Methyl-, Ethyl-, Propyl-, Vinyl- und Phenylrest. Spezielle Beispiele für $R^3$ sind der n-Butyl-, sec.-Butyl-, der tert. Butyl- und der Cyclohexylrest.

Y ist eine $R^4R^5C$-Gruppe, wobei $R^4$ und $R^5$ jeweils die gleiche Bedeutung wie $R^1$ haben können, oder eine $R^6C$-Gruppe, wobei $R^6$ für einen zweiwertigen, ggf. substituierten, Kohlenwasserstoffrest steht.

Spezielle Beispiele für Siliciumverbindungen, die insgesamt mindestens 3 über Stickstoff an Silicium gebundene Aminogruppen und/oder über Sauerstoff an Silicium gebundene Oximgruppen je Molekül aufweisen, sind

Methyltris-(n-Butylamino)-Silan,
Methyltris-(sec.-Butylamino)-Silan,
Methyltris-(Cyclohexylamino)-Silan,
Methyltris-(Methylethylketoxim)-Silan,
Methylbis-(Methylethylketoxim)-Cyclohexylaminosilan,
Methyltris-(Acetonooxim)-Silan.

Die genannten Siliciumverbindungen gemäß b) des Anspruchs können einzeln oder im Gemisch eingesetzt werden.

Die Menge an Siliciumverbindungen gemäß b) wird vorzugsweise auf die Menge an Diorganopolysiloxan gemäß a) so abgestimmt, daß pro kondensationsfähiger Endgruppe im Diorganopolysiloxan mindestens 3 über Stickstoff an Silicium gebundene Aminogruppen und/oder über Sauerstoff an Silicium gebundene Oximgruppen aus der Komponente gemäß b) vorliegen.

Die Komponente gemäß c) ist ausgewählt aus der Gruppe der mercaptofunktionellen Silane oder -Organopolysiloxane. Sie enthält mithin mindestens eine Si—C-gebundene Thiolgruppe.

Die erfindungsgemäß eingesetzten Silane lassen sich durch die allgemeine Formel

$$SiR^7_cR^8_dQ_{4-c-d}$$

darstellen, wobei Q eine

$$-(CH_2)_p-SH\text{-Gruppe}$$

darstellt und p eine ganze Zahl von 1 bis 5, vorzugsweise 3, ist.

$R^7$ ist eine Alkoxygruppe mit 1 bis 5 Kohlenstoffatomen, vorzugsweise die Methoxygruppe.
$R^8$ hat die gleiche Bedeutung wie $R^1$.
c ist eine ganze Zahl von 1 bis 3.
d ist eine ganze Zahl von 0 bis 2.

Ferner ist die Summe von c und d höchstens 3.

Die erfindungsgemäß ebenso einsetzbaren Siloxane, die mindestens eine über Si—C-gebundene Thiolgruppe aufweisen, können mindestens noch eine weitere kondensationsfähige Gruppe aufweisende Teilhydrolysate der obengenannten Silane mit bis zu 10 Siliciumatomen sein oder mindestens eine weitere kondensationsfähige Gruppe aufweisende Kondensationsprodukte bzw. Äquilibrate der genannten Silane oder deren Teilhydrolysate mit kondensationsfähige Gruppen aufweisenden Organopolysiloxanen mit bis zu 2000 Si-Atomen.

Die Komponente gemäß a) wird in Mengen von 30 bis 98 Gew.-%, vorzugsweise 60 bis 80 Gew.-%,
die Komponente gemäß b) in Mengen von 0,2 bis 15 Gew.-%, vorzugsweise 1 bis 8 Gew.-%, und
die Komponente gemäß c) in Mengen von 0,1 bis 20 Gew.-%, vorzugsweise 0,1 bis 5 Gew.-%, eingesetzt.

Die angegebenen Gewichtsprozenteinheiten beziehen sich dabei jeweils auf das Gesamtgewicht der Masse.

Zusätzlich zu den Komponenten gemäß a), b) und c) können bei der Bereitung der erfindungsgemäßen Organopolysiloxanmassen Stoffe mitverwendet werden, die auch bisher bei der Herstellung von bei Raumtemperatur vernetzenden Silikonkautschuken mitverwendet werden konnten. Beispiele für solche Zusatzstoffe sind verstärkende und nichtverstärkende Füllstoffe, Pigmente, lösliche Farbstoffe, Riechstoffe, Organopolysiloxanharze, Polyvinylchloridpulver, Korrosionsinhibitoren, Oxidationsinhibitoren, Hitzestabilisatoren, Lösungsmittel, Haftvermittler, Kondensationskatalysatoren, wie Zinnsalze oder Organozinnsalze von Carbonsäuren, wie Dibutylzinndilaurat, -diacetat, oder basische Stickstoffverbindungen, wie 3-Ethoxypropylamin-1 oder n-Hexylamin, Weichmacher, wie mit Trimethylsiloxygruppen entblockierte Dimethylpolysiloxanöle oder Phosphorsäureester, wie Trioleylphosphat, ferner Polyglykole sowie Blockmischpolymerisate von Organopolysiloxanen und Polyglykolen.

Beispiele für verstärkende Füllstoffe sind feinteilige, spezifische Oberflächen von mindestens 50 $m^2/g$ aufweisende pyrogen erzeugte oder gefällte Kieselsäuren, Titandioxid, Eisenoxide, Aluminiumoxid, Zinnoxid oder ggf. graphitierter Kohlenstoff.

Beispiele für nichtverstärkte Füllstoffe sind Füllstoffe mit spezifischen Oberflächen unter 50 $m^2/g$, wie beispielsweise Quarzmehl, Diatomenerde, Kieselkreide, Neuburger Kreide, Calciumsilikat, Zirkonsilikat, Calciumsilikat oder Alumosilikate einschließlich solcher mit Molekularsiebeigenschaften.

Die Füllstoffe können nach den auch bereits bisher bekannten Methoden hydrophobiert sein. Es können Gemische aus verschiedenen, verstärkenden und/oder nichtverstärkenden Füllstoffen eingesetzt werden.

Zur Herstellung der erfindunsemäßen Silikonkautschuke können die Bestandteile in an sich beliebiger Reihenfolge vermischt werden. Dieses Vermischen erfolgt vorzugsweise bei Raumtemperatur oder bei Temperaturen bis 150°C unter Ausschluß von Wasser.

Die erfindungsgemäßen Silikonkautschuke vernetzen bei Raumtemperatur unter dem Einfluß der Luftfeuchtigkeit. Die Vernetzung kann aber auch, falls erwünscht, bei niedrigeren oder höheren Temperaturen erfolgen. Insbesondere in dünnen Schichten ist eine schnelle Vernetzung bei Temperaturen bis zu 200° C möglich. Die Vernetzung kann auch in Gegenwart von den Wassergehalt der Luft übersteigenden Mengen an Wasser durchgeführt werden.

Die erfindungsgemäßen Organopolysiloxanmassen eignen sich insbesondere als Fugen-, Dichtungs-, Verkittungs- oder Beschichtungsmassen.

Der erfindungsgemäße Zusatz mercaptofunktioneller Silane bzw. Siloxane bewirkt eine extrem verlängerte Hautbildungszeit der Massen. Gleichwohl vulkanisieren die Kautschuke in vergleichbarer Geschwindigkeit. Sie werden deshalb insbesondere zur Verwendung in Siebdruckverfahren eingesetzt. Im speziellen Fall werden die erfindungsgemäßen Massen zur Herstellung von Dichtungen in Siebdruckverfahren eingesetzt, wobei ein Motorblock als Substrat dienen kann.

Beispiel 1

70 Gew.-Teile eines in den endständigen Einheiten je eine Si-gebundene Hydroxylgruppe aufweisenden Dimethylpolysiloxans einer Viskosität von 18 500 mPa · s werden mit 21 Gew.-Teilen eines mit Trimethylsiloxigruppen endblokkierten Dimethylpolysiloxanöls einer Viskosität von 100 mPa · s und 3,5 Gew.-Teilen pyrogen erzeugten Siliciumdioxids mit einer spezifischen Oberfläche von 150 $m^2/g$ vermischt. In diese Masse werden 5,4 Gew.-Teile Methyltris(Butanon-2-oximo)-Silan eingerührt. Danach wird die Mischung noch mit 0,1 Gew.-Teil Dibutylzinndiacetat und 0,3 Gew.-Teilen 3-Mercaptopropyltrimethoxysilan versetzt. Es wird unter Ausschluß von Wasser gearbeitet.

Es wird eine fließfähige, unter Ausschluß von Luftfeuchtigkeit lagerstabile Silikonkautschukmasse erhalten, die unter dem Einfluß von Luftfeuchtigkeit zu einem Elastomeren härtet.

Die Zeit bis zur Bildung einer Haut an der Oberfläche dieser Masse beträgt bei 50%iger relativer Luftfeuchtigkeit und 23° C 6 Stunden.

Die zu vernetzende Masse wurde ferner in Aluminiumschälchen mit 24 mm Durchmesser und 18 mm Tiefe gefüllt um die Vulkanisationsgeschwindigkeit zu bestimmen. Bei 50%iger relativer Luftfeuchtigkeit und 23° C waren nach 3 Tagen 3,5 mm, nach 7 Tagen 5,5 mm und nach 14 Tagen 10,0 mm in der Tiefe durchvulkanisiert.

Vergleichsbeispiel 1

Es wird die Arbeitsweise gemäß Beispiel 1 wiederholt, mit der Abänderung, daß der Zusatz von 0,3 Gew.-Teilen 3-Mercaptopropyltrimethoxysilan unterbleibt.

Die Hautbildungszeit der Masse, bei 50%iger relativer Luftfeuchtigkeit und 23° C betrug 1 Stunde.

Vulkanisationsgeschwindigkeit:

Es waren bei einer 50%igen relativen Luftfeuchtigkeit bei 23° C nach 3 Tagen 4,5 mm, nach 7 Tagen 6,5 mm und nach 14 Tagen 11,0 mm in der Tiefe durchvulkanisiert.

Beispiel 2

83 Gew.-Teile eines in den endständigen Einheiten je eine Si-gebundene Hydroxylgruppe aufweisenden Dimethylpolysiloxans einer Viskosität von 18 500 mPa · s wurden mit 12 Gew.-Teilen pyrogen erzeugten, mit Silan hydrophobierten Siliciumdioxids mit einer spezifischen Oberfläche von 170 $m^2/g$ (Handelsprodukt HDK H 2000, Wacker-Chemie) vermischt. Dazu wurden 4,9 Gew.-Teile Methyltris(butanon-2-oximo)-Silan und 0,1 Gew.-Teile Dibutylzinndiacetat eingerührt. Es wurde unter Ausschluß von Wasser gearbeitet. Dabei entstand eine fließfähige, unter Ausschluß von Luftfeuchtigkeit lagerstabile Masse A.

In diese Masse wurden

a) 0,5 Gew.-Teile 3-Mercaptopropyltrimethoxysilan (unter Erhalt der Masse B)
b) 0,5 Gew.-Teile Dimethyl-3-mercaptopropylmethoxysilan (unter Erhalt der Masse C)
c) 1 Gew.-Teil eines Umsetzungsprodukts aus 600 g eines in den endständigen Einheiten je eine Si-gebundene Hydroxylgruppe aufweisenden Dimethylpolysiloxans mit 3,7 Gew.-% Sigebundenen Hydroxylgruppen und 200 g 3-Mercaptopropyltrimethoxysilans (unter Erhalt der Masse D)
d) 0,5 Gew.-Teile eines durchschnittlich 2 Siliciumatome enthaltenden Teilhydrolysats von 3-Mercaptopropyltrimethoxysilan (unter Erhalt der Masse E)

eingerührt.

In der folgenden Tabelle werden die Hautbildungszeiten der Massen bei 50%iger relativer Luftfeuchtigkeit und 23° C angegeben:

Tabelle 1

| Masse | Hautbildungszeit |
|---|---|
| A (Vergleich) | 50 Minuten |
| B | 8 Stunden |
| C | 7 Stunden |
| D | 7 Stunden |
| E | 8 Stunden |

Beispiel 3

83,3 Gew.-Teile eines in den endständigen Einheiten je eine Si-gebundene Hydroxylgruppe aufweisenden Dimethylpolysiloxans werden mit 4,5 Gew.-Teilen Methyltris(butanon-2-oximo)-Silans und 12 Gew.-Teilen graphitierten Kohlenstoffs mit einer spezifischen Oberfläche von 70 $m^2$/g vermischt. Dieser Mischung werden noch 0,2 Gew.-Teile Dibutylzinndilaurat und 0,3 Gew.-Teile 3-Mercaptopropyltrimethoxysilan zugesetzt.

Es wird eine standfeste, unter Ausschluß von Luftfeuchtigkeit lagerstabile Masse erhalten.

Die Hautbildungszeit der Masse bei 50%iger Luftfeuchtigkeit und 23° C beträgt 8 Stunden.

Im Vergleich dazu beträgt die Hautbildungszeit einer im übrigen gleichen Masse ohne den Zusatz von 0,3 Teilen 3-Mercaptopropyltrimethoxysilan lediglich 60 Minuten.

Beispiel 4

Die in Beispiel 1 beschriebene Masse wird auf die Oberfläche eines Siebdruckrahmens gegeben. Der nicht mit einem Film belegte Teil des Siebes hat die Gestalt einer Dichtung. Mit Hilfe eines Rakels werden Motorblöcke, die als Substrate dienen, mit Dichtungen aus Silikonkautschuk in einer Schichtdicke von 200 µm bedruckt.

Die Masse läßt sich, ohne daß sie zu vernetzen beginnt und Hautfetzen bildet, über einen Zeitraum von 6 Stunden einwandfrei siebdrucktechnisch verarbeiten. Nach etwa 24 Stunden sind die gedruckten Dichtungen bei RT und 50% relativer Luftfeuchtigkeit vulkanisiert. Werden die gedruckten Dichtungen in einem Trockenschrank bei 150° C und hoher relativer Luftfeuchtigkeit gegeben, so sind sie unter den genannten Bedingungen nach ca. 10 Minuten vulkanisiert.

Vergleichsbeispiel 2

Es wird die Arbeitsweise gemäß Beispiel 4 wiederholt, mit der Abänderung, daß die Masse gemäß Vergleichsbeispiel 1 eingesetzt wird.

Innerhalb 1 Stunde bilden sich Hautfetzen, nach 1,5 Stunden ist das Sieb verklebt.

**Patentansprüche**

1. Unter Ausschluß von Wasser lagerfähige, bei Zutritt von Wasser bei Raumtemperatur zu Elastomeren vernetzende Masse auf Basis von Organopolysiloxan, die

a) 30—98 Gew.-% kondensationsfähige Endgruppen aufweisendes Diorganopolysiloxan,
b) 0,2—15 Gew.-% Siliciumverbindungen, die je Molekül mindestens 3 über Stickstoff an Silicium gebundene Aminogruppen und/oder über Sauerstoff an Silicium gebundene Oximgruppen aufweisen, und ggf.
d) übliche Zusätze

enthalten, dadurch gekennzeichnet, daß sie als weitere Komponente

c) 0,1—20 Gew.-% Siliciumverbindungen enthalten, die je Molekül mindestens eine über Kohlenstoff gebundene Thiolgruppe aufweisen,

wobei sich die Mengenangaben jeweils auf das Gesamtgewicht der Masse beziehen.

2. Verwendung der Masse nach Anspruch 1 im Siebdruckverfahren.

**Claims**

1. Composition based on an organopolysiloxane, that can be stored in the absence of water and that cross-links at room temperature in the presence of water to form an elastomer, an that comprises

a) from 30 to 98% by weight of a diorganopolysiloxane containing condensable terminal groups,
b) from 0.2 to 15% by weight of a silicon compound that contains, per molecule, at least three groups selected from amino groups bonded to silicon via nitrogen and oxime groups bonded to silicon via oxygen and, optionally,
d) customary additives,

characterised in that it, additionally comprises, as a further component,

c) from 0.1 to 20% by weight of a silicon compound that contains, per molecule, at least one thiol group bonded via carbon,

the stated amounts each being based on the total weight of the composition.

2. Use of the composition according to claim 1 in a screen printing process.

**Revendications**

1. Matière à base d'un poly-organosiloxane qui se conserve bien à l'abri de l'humidité et qui, lorsqu'elle vient en contact avec de l'eau, à la température ambiante, se réticule en se convertissant en un élastomère, matière qui contient:

a) de 30 à 98% en poids d'un poly-diorganosiloxane contenant des radicaux terminaux condensables,
b) de 0,2 à 15% en poids de composés du silicium qui renferment, par molécule, au moins 3 radicaux amino liés au silicium par l'azote et/ou radicaux d'oximes liés au silicium par l'oxygène, et éventuellement
d) des additifs usuels,

et qui est caractérisée en ce qu'elle contient, comme composante supplémentaire:

c) de 0,1 à 20% en poids de composés du silicium qui renferment, par molécule, au moins un radical de thiol lié par un atome de carbone,

les pourcentages indiqués étant rapportés à chaque fois au poids total de la matière.

2. Application de la matière selon la revendication 1 dans le procédé de sérigraphie.